(19) Europäisches Patentamt
European Patent Office
Office européen des brevets

(11) **EP 3 920 142 A2**

(12) **EUROPEAN PATENT APPLICATION**

(43) Date of publication:
**08.12.2021 Bulletin 2021/49**

(51) Int Cl.:
***G06T 7/20*** (2017.01)

(21) Application number: **21173578.2**

(22) Date of filing: **12.05.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.05.2020 JP 2020083938**

(71) Applicant: **Hitachi, Ltd.
Tokyo 100-8280 (JP)**

(72) Inventors:
• **Kong, Quan
Tokyo, 1008280 (JP)**
• **Yoshinaga, Tomoaki
Tokyo, 1008280 (JP)**
• **Murakami, Tomokazu
Tokyo, 1008280 (JP)**

(74) Representative: **Manitz Finsterwald
Patent- und Rechtsanwaltspartnerschaft mbB
Martin-Greif-Strasse 1
80336 München (DE)**

(54) **VIDEO PROCESSING APPARATUS AND VIDEO PROCESSING METHOD**

(57)  A video processing apparatus that processes a video of a moving body captured by a camera is configured to sample frames output from the camera at a predetermined rate, calculate a direction of motion of the moving body based on a sequence of a plurality of the frames, and extract a feature amount of the video by performing convolution processing together on the plurality of the frames based on the calculated direction.

**EP 3 920 142 A2**

**Description**

BACKGROUND OF THE INVENTION

1. Field of the Invention

The present invention relates to a video processing apparatus and a video processing method, and more specifically, to video processing suitable for analyzing a mode of action of a moving body in a video.

2. Description of the Related Art

Action analysis technology for a moving body in a video is expected to be applied in fields such as surveillance video analysis, healthcare, and life logs. Video information is 3D spatiotemporal information consisting of both 2D spatial information and 1D temporal information, and thus has high complexity.

A convolutional neural network, which is well known as an effective technique in a field of still image analysis, is also applied to in-video action analysis. For example, JP 2018-206321 A described below discloses an image processing apparatus that calculates human posture information by applying a 2D convolution operation to a still image of each frame extracted from a video and estimates a human action class based on the information.

Further, a two-stream method is known in which respective features are modeled from spatial information of a video and from optical flow information representing a motion change in a temporal direction of an action of a moving body in the video, and ensemble is finally performed on both features (Karen Simonyan, et al., Two-stream convolutional networks for action recognition in videos, Proceedings of the 27th International Conference on Neural Information Processing Systems, 2014).

Furthermore, 3D convolution is also proposed in which an image processing system performs convolution processing on a plurality of frames acquired in a time-series manner (Shuiwang Ji, et al., 3D Convolutional Neural Networks for Human Action Recognition, IEEE Transactions on Pattern Analysis and Machine Intelligence, 2013).

SUMMARY OF THE INVENTION

In the conventional technology according to JP 2018-206321 A, since convolution processing is just applied to still image frames, temporal sequentiality as a characteristic of motion is impaired. Thus, it is not suitable for analyzing a human action class.

Meanwhile, the technology of "3D Convolutional Neural Networks for Human Action Recognition", in which convolution processing is applied to a plurality of frames sampled continuously in the temporal direction, is superior to the technology of "Two-stream convolutional networks for action recognition in videos" in extracting action features of an object. However, convolution is performed on the plurality of frames regardless of motion flow of the moving body, which makes the former technology useless as a means of modeling the spatiotemporal action information.

Therefore, an object of the present invention is to provide a video processing technology capable of extracting a feature amount of action of a moving body with high accuracy for a video consisting of spatiotemporal information.

In order to achieve the above object, the present invention is a video processing apparatus including a controller configured to process a video of a moving body captured by a camera, and a memory that stores a program, wherein the controller is configured to, by executing the program in the memory, sample frames output from the camera at a predetermined rate, calculate a direction of motion of the moving body based on a sequence of a plurality of the frames, and extract a feature amount of the video by performing convolution processing on the plurality of the frames based on the calculated direction. Further, the present invention is a video processing method executed by the video processing apparatus.

According to the present invention, it is possible to extract a feature amount of action of a moving body with high accuracy for a video consisting of spatiotemporal information.

BRIEF DESCRIPTION OF THE DRAWINGS

Fig. 1A shows an example of a frame;
Fig. 1B shows a plurality of frames (three frames) sampled over time;
Fig. 2 is an example (first embodiment) of a functional block for action analysis processing realized by a controller;
Fig. 3 is an operational flowchart of the functional block diagram of Fig. 2;
Fig. 4 is a block diagram showing a control method of a channel pyramid (Fig. 2: 220);

Fig. 5 is a block diagram showing a detailed configuration of a first feature extraction module (Fig. 2: 204);

Fig. 6 is a model diagram showing an example of a motion calculation module (Fig. 5: 400);

Fig. 7 shows a block diagram of an operational example of a convolution execution module (Fig. 5: 402);

Fig. 8 is a block diagram showing an operational example of a resizing module (Fig. 2: 208) and a lateral combining module (Fig. 2: 210);

Fig. 9 is another example (second embodiment) of a functional block for the action analysis processing realized by the controller;

Fig. 10 is an operational flowchart of the functional block diagram of Fig. 9;

Fig. 11 is a block diagram showing a detailed configuration of an action start/end likelihood determination module (Fig. 9: 900);

Fig. 12 is a block diagram showing a relationship between a candidate movement interval generation module (Fig. 9: 902) and a likelihood filter; and

Fig. 13 is an example of a timing chart for explaining operation of the candidate movement interval generation module (Fig. 9: 902) for generating a candidate movement interval.

## DESCRIPTION OF THE PREFERRED EMBODIMENTS

Hereinafter, embodiments of the present invention will be described with reference to the accompanying drawings. A video processing system includes a (surveillance) camera for capturing a moving body and a video processing apparatus that analyzes a video taken by the camera. The camera is connected to a network, and the video processing apparatus imports images from the camera via the network into a memory at a predetermined frame rate.

The video processing apparatus includes a controller (CPU, GUI, etc.) and the memory. The controller executes a program in the memory to perform processing for analyzing an action of a moving body (object body) based on the taken video. A frame consists of a plurality of pixels, each of which stores color information. The memory stores a program for realizing the video processing system described later, and may be a non-portable recording medium (hard disk, flash memory, or storage).

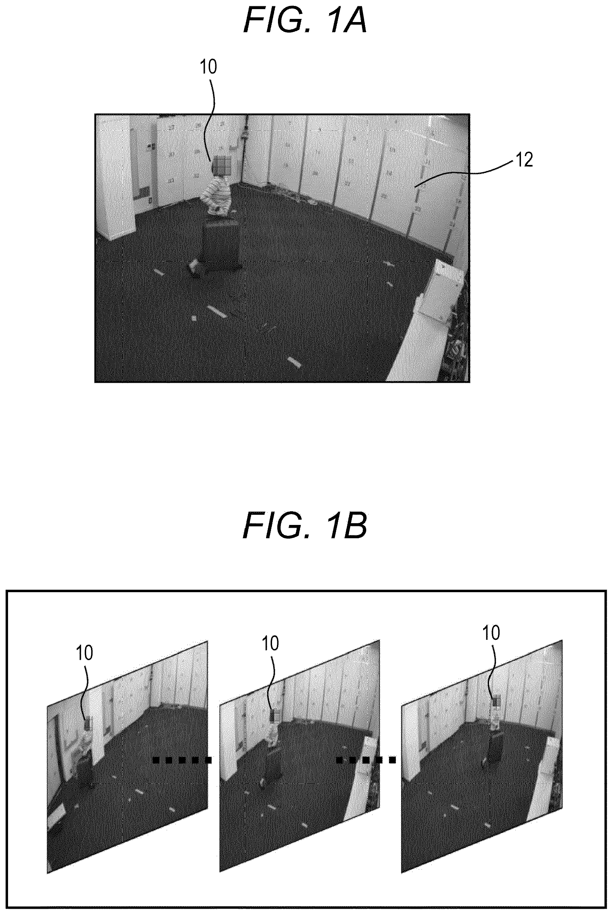

Fig. 1A shows an example of the frame, which includes an image of a person (moving body) 10 and an image of a background 12 as a non-moving body. Fig. 1B shows a plurality of frames (three frames) sampled over time, and motion of the person 10 is recorded in these frames. The moving body is not limited to a person. The moving body is not particularly limited, and may be anything capable of moving such as a vehicle.

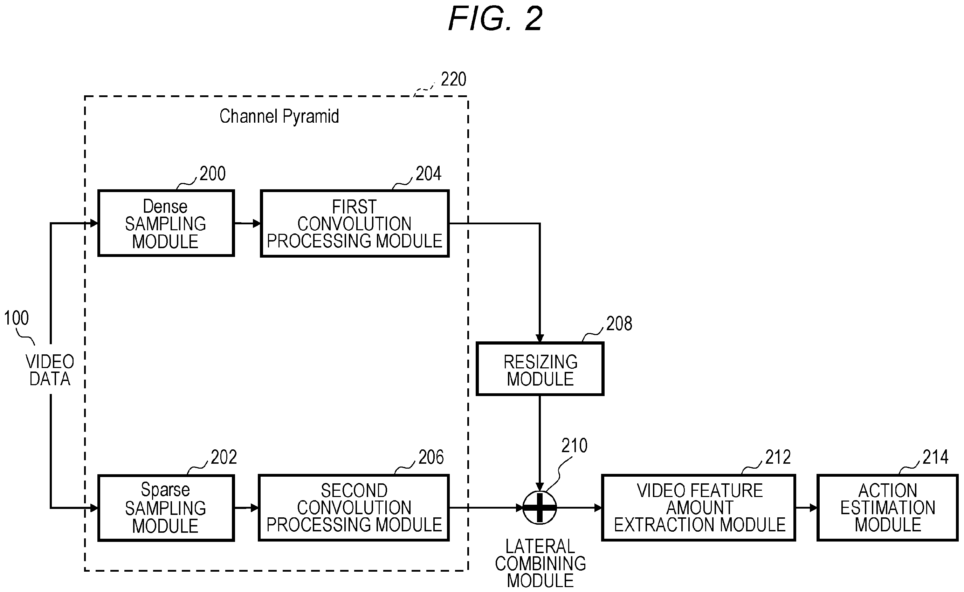

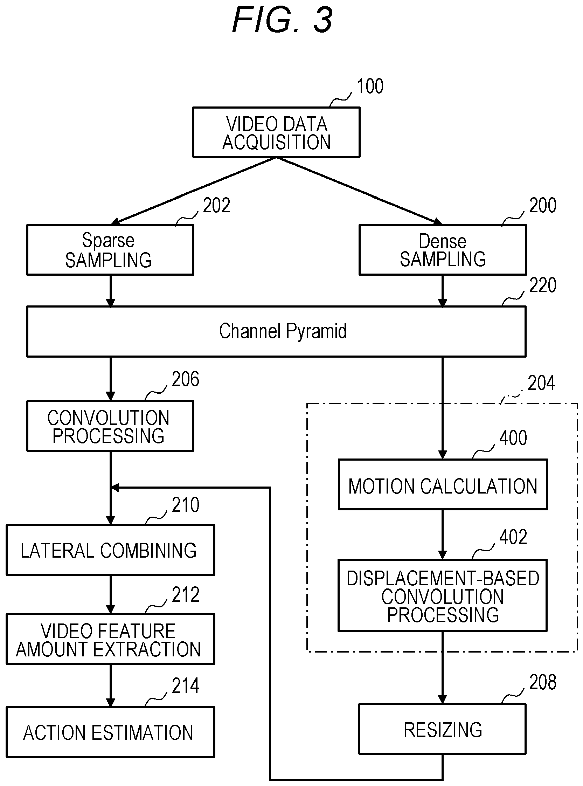

Fig. 2 is an example (first embodiment) of a functional block for the action analysis processing realized by the controller. Fig. 3 is a flowchart thereof. The controller includes a dense sampling module 200 that samples video data (frames) 100 transmitted from the surveillance camera at a relatively high rate, a sparse sampling module 202 that samples the video data 100 at a relatively low rate, a first convolution processing module 204 for extracting features of motion of a moving body for the densely sampled frames, a second convolution processing module 206 for extracting features of a non-moving body such as a background for the sparsely sampled frames, a resizing module 208 that resizes data output from the first convolution processing module 204, a lateral combining module 210 that combines the resized data with data output from the second convolution processing module 206, a video feature amount extraction module 212 that extracts a feature amount of the video based on the combined data, and an evaluation module 214 that estimates an action of the moving body based on the video feature amount.

The modules are implemented by the controller executing a program and/or by hardware. The module may be paraphrased with means, function, circuit, or unit. The camera is a video acquisition module.

In the first embodiment, an action is recognized and an action class is estimated for video data that is input from the camera to the controller and is delimited by a start and an end of the action. The dense sampling module 200 performs sampling on the video at a high frame rate so that the first convolution processing module 204 can extract the features of the motion of the moving body in the video. The first convolution processing module 204 performs convolution processing along a trajectory of the motion, in other words, in a temporal direction on a plurality of frames sampled continuously.

The sparse sampling module 202 conducts sampling at a low frame rate instead of sampling at the high frame rate as in the dense sampling module 200 so that the second convolution processing module 206 is suitable for extracting the features of the non-moving body in the frame. Convolution processing on the spatiotemporal video is realized by combining the convolution processing in the temporal direction (3D convolution processing) by the first convolution processing module 204 and convolution processing in a spatial direction (2D convolution processing) by the second convolution processing module 206.

In the convolution processing in the spatial direction by the second convolution processing module 206, a convolution matrix is created by multiplying pixel values (weight) of a filter called a kernel (for example, 3 pixels x 3 pixels) by pixel values of a frame with sliding the filter from the top left pixel to the bottom right pixel of a matrix of the frame on a pixel-by-pixel basis. The convolution processing in the temporal direction will be described later. The weight of the filter (value of each pixel) may be decided by learning.

The controller realizes a control method, referred to as a channel pyramid 220 for convenience, in which the number of channels of convolution processing is hierarchically increased or decreased depending on the frame sampling rate on the video for unified control of a plurality of sampling paths and convolution processing for each path.

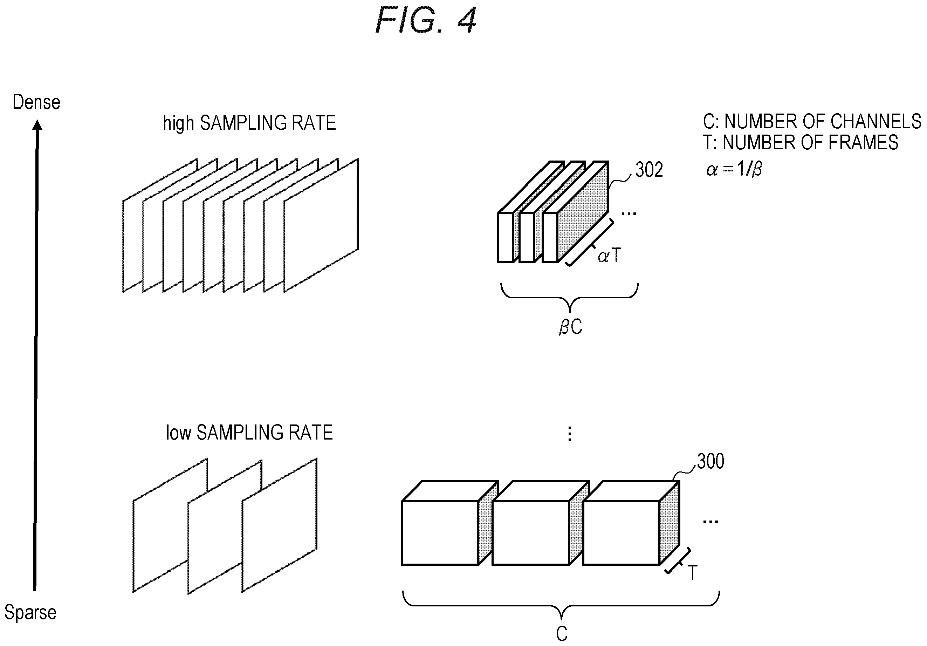

Fig. 4 is a block diagram of this control method. Assuming that the number of frames sampled at the low sampling rate is "T", the number of frames sampled at the high sampling rate is "$\alpha T$ ($\alpha > 1$, $\alpha = 2^n$, n: an integer of 1 or greater)".

Then, assuming that the number of channels of the convolution processing on the frames sampled at the low rate by the second convolution processing module 206 is "C", the channels of the convolution processing on the frames sampled at the high rate by the first convolution processing module 204 is "$\beta C$ ($\beta = 1/\alpha$)". This shows that, in the convolution processing by the first convolution processing module 204, the number of channels is small in response to the increased number of frames.

In ordered to fully learn information including no spatial motion change, more kernel filters are required. However, there is a problem that, if the number of frames is large and the number of kernels is also large, the speed of the 3D convolution processing drops significantly. Thus, the first convolution processing module 204 proportionally reduces the number of channels in response to the increased number of frames. The number of channels may be the number of filters. A plurality of filters improve the accuracy in extracting features by the convolution processing in the spatial direction on a frame. Matrices 300 and 302 are obtained by convolution processing.

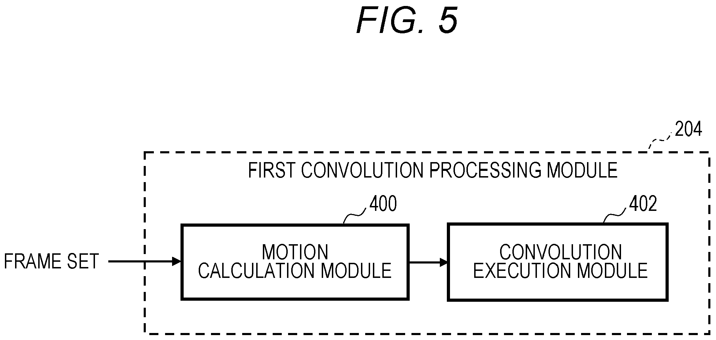

Fig. 5 is a block diagram showing details of the first feature extraction module 204. The first feature extraction module 204 includes a motion calculation module 400 and a convolution execution module 402 for performing the convolution processing along the trajectory direction of the motion of the moving body in the video.

The first feature extraction module 204 extracts the moving body in the video from a sequence of frames sampled over time, and further, extracts a displacement degree (or displacement amount) of a region of the moving body such as trajectory direction (or displacement direction) and displacement magnitude from the sequence of frames (motion calculation module 400). The first feature extraction module 204 performs a convolution operation based on the displacement degree (convolution execution module 402). Note that, "extract" may be paraphrased with set, determine, calculate, estimate, judge, recognize, distinguish, or the like.

The motion calculation module 400 applies "optical flow" (for example, Fleet, David J.; Weiss, Yair (2006), "Optical Flow Estimation", in Paragios, Nikos; Chen, Yunmei; Faugeras, Olivier D. (eds.), Handbook of Mathematical Models in Computer Vision, Springer, pp. 237-257, ISBN 978-0-387-26371-7) to the sequence of a plurality of frames to calculate at least the motion displacement direction of the moving body. In the optical flow, movement of an object portion in two or more images or overall movement is estimated to be represented by a vector by using the images with the object portion that commonly appears in the images as a clue. The Lucas-Kanade method (LK method) and the like are known. Various other methods have been proposed, and a method through estimation by deep learning is also possible.

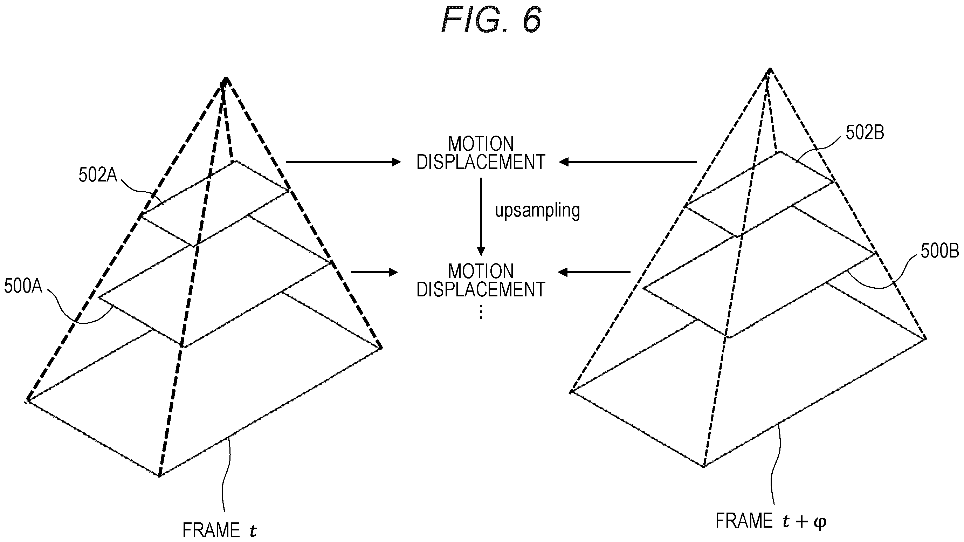

Fig. 6 is a model diagram showing an example of the motion calculation module 400. A frame t and a frame t + φ are original-size frames sampled continuously over time, frames 500A and 500B are frames obtained by reducing the horizontal and vertical sizes of the original frames to 1/2, and frames 502A and 502B are frames obtained by reducing the horizontal and vertical sizes of the original frames to 1/4.

The motion calculation module 400 applies the optical flow to frames having the same frame size to calculate the displacement amount (displacement degree) of the motion such as the displacement direction and the displacement magnitude of the motion for each pixel of the frames. The direction and the displacement amount are expressed as a vector, which is defined as a motion vector.

The motion calculation module 400 applies the optical flow to frames of the same scaling size to calculate the displacement of the motion of the moving body for each frame size. The motion calculation module 400 converts or corrects the motion vectors calculated between the frames having the 1/4 frame size by upsampling to the 1/2 frame size, and integrates the converted motion vectors into the motion vectors calculated between the frames having the 1/2 frame size. The integration may be an operation of averaging a plurality of motion vectors.

Next, the motion calculation module 400 converts the motion direction in the frames having the 1/2 frame size by upsampling to the original frame size, and integrates the converted motion direction into the motion direction calculated between the frames having the original frame size. Then, a final value of the motion direction is obtained.

When the camera is fixed at a specific point like a surveillance camera, the size of the moving body in a frame changes depending on a distance from the camera to the moving body. The motion direction of a moving body of which size is small compared to the frame size can be calculated with high accuracy by the optical flow, but the motion direction of a moving body of which size is large compared to the frame size is calculated with lower accuracy. Influence by the different accuracy in calculating the motion direction depending on the size of the moving body with respect to the frame size can be removed by integrating the motion direction based on the frames having the small frame size with the motion direction based on the frames having the large original frame size as described above. As a result, the motion direction is calculated more correctly, and an appropriate value thereof can be obtained more surely.

Next, the convolution execution module 402 will be described. Conventional 3D convolution processing in the temporal direction is performed by executing a filter-based convolution operation on each of time-series frames sampled from the camera video and by linearly combining results of the operations on the plurality of frames.

However, the conventional convolution is performed based on pixels at the same position across the plurality of frames although coordinates of pixels in each frame related to motion in the plurality of frames often differ significantly between the plurality of frames, which causes failure to capture change in the motion. Thus, the conventional 3D convolution processing has been unsuitable as a modeling means for a moving body having spatiotemporal action information.

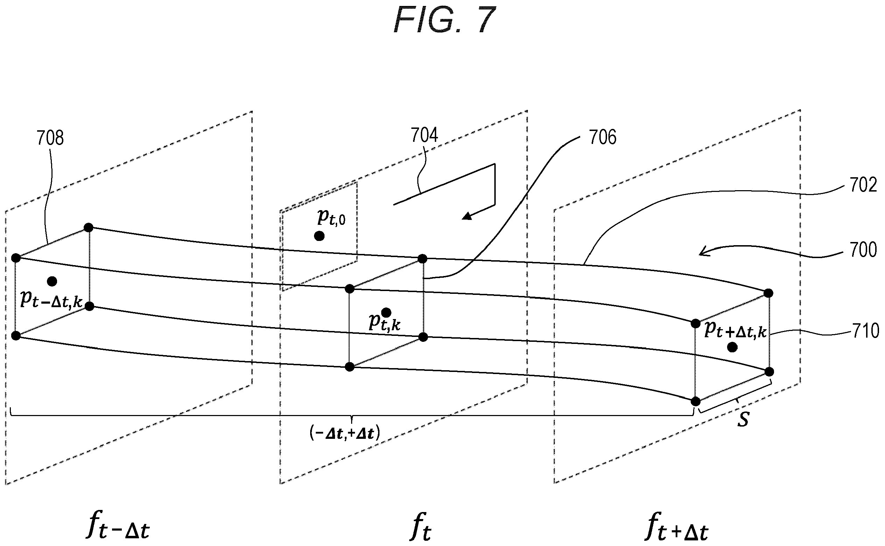

Fig. 7 shows a block diagram of an operational example of the convolution execution module 402. Fig. 7 shows an example of the convolution processing in the temporal direction on a frame $f_t$ at a time t. Frames $f_{t-\Delta t}$, $f_t$, and $f_{t+\Delta t}$ are a sequence of frames sampled continuously at timings of t - $\Delta t$, t, and t + $\Delta t$, respectively.

Motion 700 is motion of a moving body, and a motion displacement direction 702 is calculated by the optical flow. $P_{t,k}$ represents coordinates of a center point of a window having a size same as a kernel size $S^2$. $k \leq N$, and N is the number of windows depending on a spatial stride when sliding a kernel from the top left to the bottom right. $P_{t-\Delta t,k}$ and $P_{t+\Delta t,k}$ represent coordinates of centers of windows in the frames before and after the time t, corresponding to $P_{t,k}$, and are calculated according to the motion displacement direction.

A kernel 706 with center coordinates ($P_{t,k}$) is used for the convolution operation on the frame $f_t$, a kernel 708 with center coordinates ($P_{t-\Delta t,k}$) is used for the convolution operation on the frame $f_{t-\Delta t}$, and a kernel 710 with center coordinates ($P_{t+\Delta t,k}$) is used for the convolution operation on the frame $f_{t+\Delta t}$.

A relationship between the center coordinates of these three kernels is as follows.

$$P_{t-\Delta t,\ k} = P_{t,\ k} + (W_{t-\Delta t}) * P_{t,\ k}$$

$$P_{t+\Delta t,\ k} = P_{t,\ k} + (W_{t+\Delta t}) * P_{t,\ k}$$

w: A displacement direction and a degree of motion calculated from the optical flow.

In this way, when the direction of the moving body is displaced, the coordinates of the kernel filters for the plurality of frames are different from each other in accordance with the displacement of the direction.

The center coordinates in the respective frames of the three kernels linked together by the motion 700 differ from each other according to the motion displacement direction 702.

The convolution execution module 402 performs 3D convolution on the frames $f_{t-\Delta t}$, $f_t$, and $f_{t+\Delta t}$ each time the kernel 706 is slid by one pixel from the top left ($P_{t,k=0}$) to the bottom right of the frame $f_t$.

That is, the convolution execution module 402, based on the three kernels associated with each other by the motion direction 702, performs convolution on pixels of the frame $f_{t-\Delta t}$ with the kernel 708 (the center coordinates: $P_{t-\Delta t,k}$), convolution on pixels of the frame $f_t$ with the kernel 706 (the center coordinates: $P_{t,k}$), and convolution on pixels of the frame $f_{t+\Delta t}$ with the kernel 710 (the center coordinates: $P_{t+\Delta t,k}$), and linearly combines results of the convolution operations to achieve the 3D convolution processing.

In this 3D convolution processing, the convolution operations are performed together on a plurality of frames sampled at a certain time and before and after the time. However, the 2D convolution by the second convolution processing module 206 is different in that the convolution operation is performed on one frame.

In this way, the convolution execution module 402 executes the convolution processing in the temporal direction for motion extraction on the plurality of frames based on pixels (frame pixels) at different positions according to the motion displacement direction. Therefore, it is possible to extract the feature amount for the motion according to the motion flow of the moving body with high accuracy. As a result, the accuracy in the action recognition, the action analysis, etc. for a moving person or the like is dramatically improved.

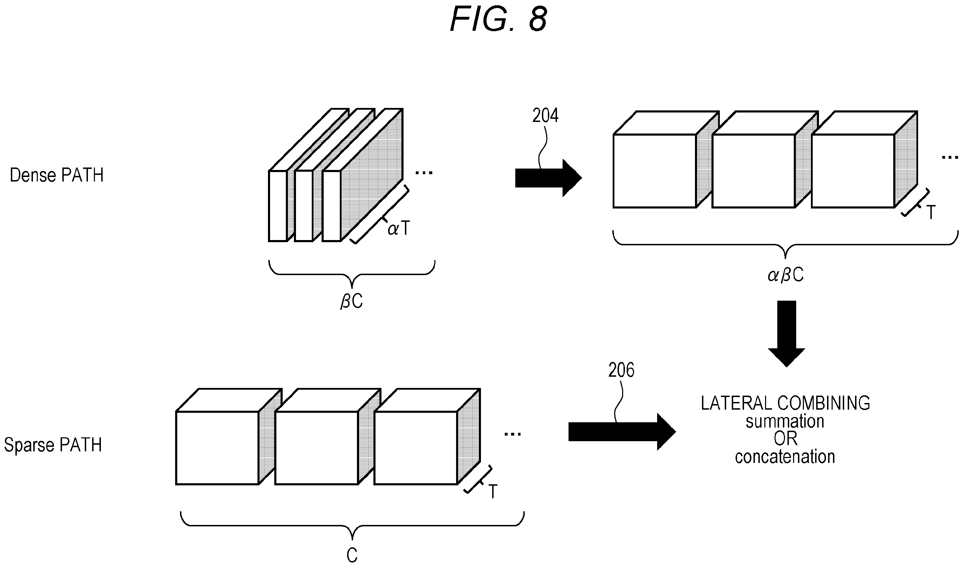

Fig. 8 is a block diagram showing an operational example of the resizing module 208 and the lateral combining module 210. Assuming that parameters {number of frames, kernel size, number of channels} of a sparse path consisting of the sparse sampling module 202 and the second convolution processing module 206 are {T, S, C}, parameters of a dense path consisting of the dense sampling module 200 and the first convolution processing module 204 are {$\alpha$T, S, $\beta$C}, which leads to failure of ensemble of information due to mismatch of a tensor size.

Thus, it is necessary to convert a shape of a tensor of the dense path. The resizing module 208 applies 3D convolution processing with a temporal stride set to $\alpha$ to the tensor of the dense path so that the number of output channels is $\alpha\beta$C ($\beta$ = 1/$\alpha$), thereby converts the shape of the tensor to {T, S, $\alpha\beta$C}. The lateral combining module 210 executes an ensemble operation, such as concatenation or summation, on the converted tensor and a tensor of the sparse path for each frame. The lateral combining module 210 performs average pooling for each frame on the combined tensor to acquire feature amounts of the frames, and further performs global pooling on the feature amounts of the frames to acquire a feature amount of the video. The feature amount of the video is output to the video feature amount extraction module 212.

The video feature amount extraction module 212 converts the combined tensor into a vector, resulting in extraction of the video feature amount.

The action estimation module 214 outputs an action class corresponding to the input video through a fully connected layer and softmax processing using the extracted video feature amount. Thus, it is possible to estimate contents of action for clipped video data of the action (a video trimmed at start and end times of the action) given from the camera to the video processing apparatus.

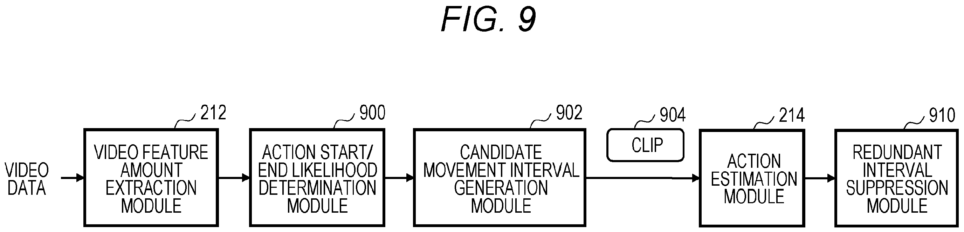

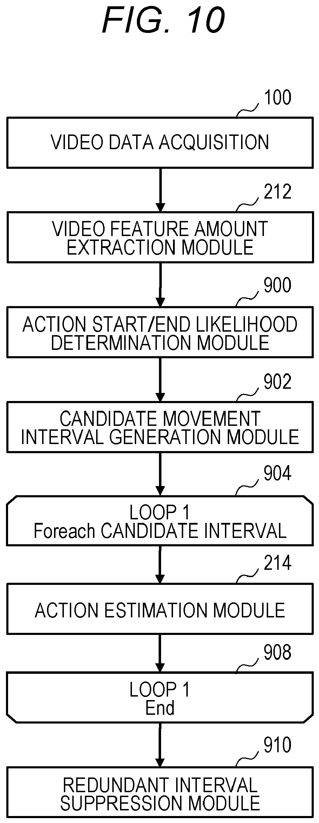

Fig. 9 is a block diagram showing details of a second embodiment. Fig. 10 is a flowchart for explaining operation of the embodiment. The second embodiment relates to action detection in which a start and an end of an action are decided from input video data for estimating an action class. In the second embodiment, an action is detected from a video based on the video feature amounts of frames using the channel pyramid structure (Fig. 4) of the first embodiment. A video feature amount extraction module 212 outputs the feature amounts of frames instead of a feature amount of the video (first embodiment).

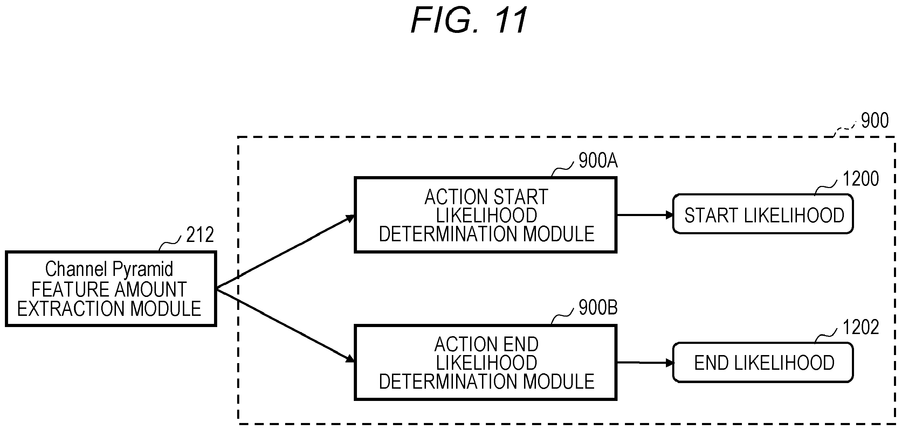

An action detection system of the second embodiment includes an action start/end likelihood determination module 900. As shown in Fig. 11, the module 900 includes an action start likelihood determination module 900A and an action end likelihood determination module 900B. The former calculates action start likelihood 1200 based on the feature amount of each frame input from the video feature amount extraction module 212, and the latter calculates action end likelihood 1202 based on the feature amount.

The action start/end likelihood determination module 900, which is configured with Gaussian Mixture Model including K independent clusters, learns a start of action and an end of action in advance based on training frame data, learns weights based on a predictive coding method, and calculates the likelihood of the "start of action" and the "end of action" for each frame based on results of the learning.

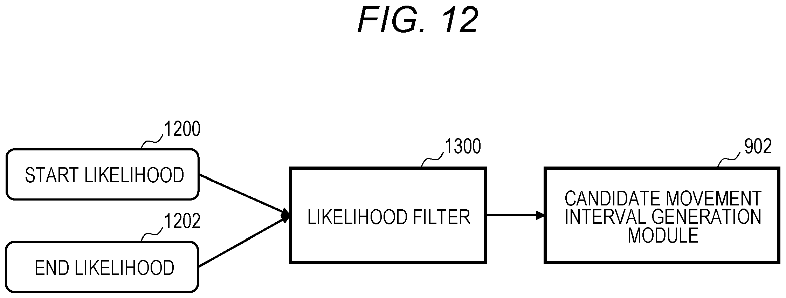

As shown in Fig. 12, a candidate movement interval generation module 902 (Fig. 9) has a likelihood filter 1300 that filters the start likelihood 1200 and the end likelihood with a likelihood threshold value. The candidate movement interval generation module 902 generates a candidate movement interval using the start likelihood and the end likelihood of each frame. The candidate movement is an action that can be a target of the action estimation, and the candidate movement interval is an interval between a start frame and an end frame of this action.

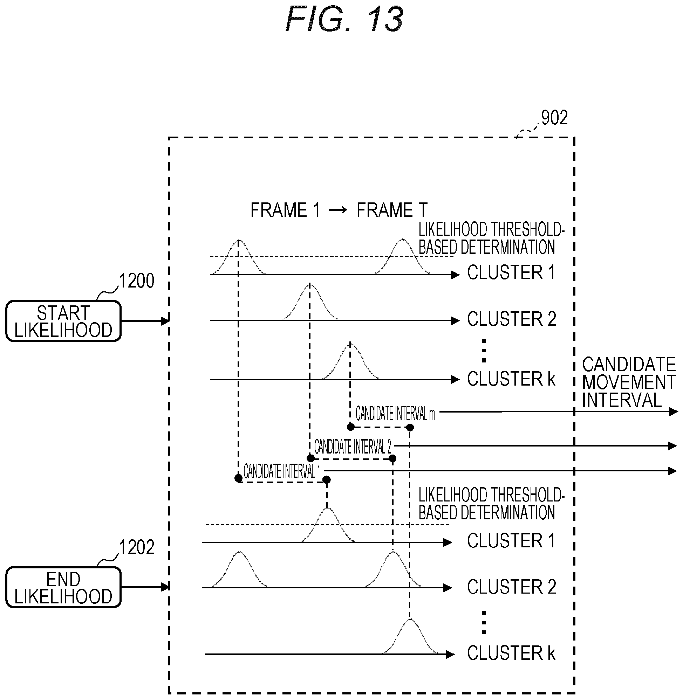

Fig. 13 is a timing chart for explaining operation of the candidate movement interval generation module 902 for generating the candidate movement interval. The likelihood filter 1300 makes determination on the start likelihood and the end likelihood of each frame based on the threshold value for each cluster. The candidate movement interval generation module 902 determines that frames having the start likelihood or end likelihood larger than the likelihood threshold value are start frames or end frames, respectively, indexes these frames, and stores the indices in a start frame list or an end frame list prepared for each cluster. The index may represent temporal context of the frame, and the older the frame, the smaller a value of the index.

The module 902 compares the indices of the frames in the start frame list with the indices of the frames in the end frame list in each of a plurality of the clusters. When the index of an end frame is larger than the index of a start frame, a pair of the start frame and the end frame are considered as a start and an end of a candidate movement interval, and the index of the start frame and the index of the end frame are output. Fig. 13 shows that a candidate interval 1 is set in a cluster 1, a candidate interval 2 is set in a cluster 2, and a candidate interval m is set in a cluster k.

An action estimation module 214 estimates an action of a moving body for a video clip 904 corresponding to each candidate movement interval generated by the candidate movement interval generation module 902, based on the video feature amounts of frames contained in the video clip 904 through a multi-layer perceptron (MLP) or the like. The action estimation module 214 estimates an action for all the candidate movement intervals. The action estimation module 214 calculates action class scores by softmax, and outputs an action label corresponding to the highest score out of the action class scores. The action estimation module 214 estimates an action for all the candidate movement intervals generated by the candidate movement interval generation module 902 (Fig. 10: 904 to 908).

A redundant interval suppression module 910 performs non-maximum suppression (NMS) to filter out redundant intervals using, from a probability list P for each action class of each video clip obtained by the estimation, an action label corresponding to argmax (P) and its probability, and the start and end times (frames) of the corresponding video clip. As a result, the most probable action label for the video clip without redundant part is decided.

The embodiments described above are examples of the present invention and do not limit the technical scope of the present invention. For example, the above-described embodiments have two sampling paths, but may have three or more. Further, the above-described 3D convolution operation along the direction of motion is performed on three frames at a certain time and before and after the time, but may be performed on more frames. Furthermore, in the above-described embodiments, a video taken by the camera is processed in real time, but a video recorded in the storage may be processed in batch processing by the video processing apparatus. Furthermore, the video processing by the video processing apparatus may be provided to a user as a cloud service for analyzing a surveillance video possessed by the user.

Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or procedure or a method step or a procedural step shall be understood also as description of means for implementing the method or procedure or method step or procedural step and/or possibly also as a data carrier holding program instructions of executable code adapted for implementing the method or procedure or method step or procedural step, and vice versa.

**Claims**

1. A video processing apparatus comprising:

    a controller configured to process a video of a moving body captured by a camera; and
    a memory that stores a program, wherein
    the controller is configured to, by executing the program in the memory,
    sample frames output from the camera at a predetermined rate,
    calculate a direction of motion of the moving body based on a sequence of a plurality of the frames, and
    extract a feature amount of the video by performing convolution processing on the plurality of the frames based on the calculated direction.

2. The video processing apparatus according to claim 1, wherein
the controller is configured to:

    set kernel filters for the plurality of the frames, the kernel filters for the plurality of the frames having respective coordinates in the frames different from each other based on the direction;
    perform the convolution processing on the plurality of the frames with the kernel filters set for the frames; and
    combine results of the convolution processing on the plurality of the frames.

3. The video processing apparatus according to claim 2, wherein
the controller is configured to, when the direction of the moving body is displaced, make the respective coordinates of the kernel filters for the plurality of the frames different from each other in accordance with displacement of the direction.

4. The video processing apparatus according to claim 1, wherein
the controller is configured to
perform sampling on the video from the camera at a high frame rate, and
perform the convolution processing on a plurality of frames obtained by the sampling.

5. The video processing apparatus according to claim 4, wherein
the controller is configured to
perform sampling on the video from the camera at a low frame rate, and
perform second convolution processing on each of a plurality of frames obtained by the sampling.

6. The video processing apparatus according to claim 5, wherein
the controller is configured to
set a number of the frames sampled at the high frame rate to be larger than a number of the frames sampled at the low frame rate, and
set a number of kernel filters for the convolution processing on the frames sampled at the high frame rate to be smaller than a number of kernel filters for the second convolution processing on the frames sampled at the low frame rate.

7. The video processing apparatus according to claim 4, wherein
the controller is configured to obtain an appropriate value of the direction of the moving body by:

calculating the direction of the moving body based on a sequence of the frames sampled at the high frame rate;

reducing sizes of the sequence of the frames and calculating the direction of the moving body based on a sequence of frames obtained by reducing the sizes; and

integrating a calculation result of the direction of the moving body based on the sequence of the frames obtained by reducing the sizes into a calculation result of the direction of the moving body based on the sequence of the frames having the sizes before reduction.

8. The video processing apparatus according to claim 5, wherein
the controller is configured to

convert a shape of a tensor of a feature amount obtained by the convolution processing on the frames sampled at the high frame rate, and

integrate the converted tensor into a tensor of a feature amount obtained by the second convolution processing on the frames sampled at the low frame rate.

9. The video processing apparatus according to claim 1, wherein
the controller is configured to:

extract video feature amounts for the plurality of the sampled frames;

determine whether each of the frames is a start frame of an action interval of the moving body or whether each of the frames is an end frame of the action interval based on the video feature amounts of the plurality of the frames; and

estimate an action of the moving body based on the video feature amounts of a plurality of the frames included in the action interval between the start frame and the end frame.

10. A video processing method for a video processing apparatus to process a video of a moving body captured by a camera, comprising:

by the video processing apparatus,

sampling frames output from the camera at a predetermined rate;

calculating a direction of motion of the moving body based on a sequence of a plurality of the frames; and

extracting a feature amount of the video by performing convolution processing together on the plurality of the frames based on the calculated direction.

# FIG. 1A

# FIG. 1B

*FIG. 2*

EP 3 920 142 A2

# FIG. 3

# FIG. 4

Dense

Sparse

high SAMPLING RATE

low SAMPLING RATE

C: NUMBER OF CHANNELS
T: NUMBER OF FRAMES

$\alpha = 1/\beta$

302

$\alpha$T

$\beta$C

300

T

C

EP 3 920 142 A2

## FIG. 5

## FIG. 6

502A

500A

FRAME $t$

MOTION
DISPLACEMENT

upsampling

MOTION
DISPLACEMENT
⋮

502B

500B

FRAME $t + \varphi$

EP 3 920 142 A2

FIG. 7

EP 3 920 142 A2

# FIG. 8

Dense PATH

βC

204

αβC

206

Sparse PATH

C

LATERAL COMBINING
summation
OR
concatenation

EP 3 920 142 A2

## FIG. 9

VIDEO DATA → [VIDEO FEATURE AMOUNT EXTRACTION MODULE ~212] → [ACTION START/ END LIKELIHOOD DETERMINATION MODULE ~900] → [CANDIDATE MOVEMENT INTERVAL GENERATION MODULE ~902] → (CLIP ~904) → [ACTION ESTIMATION MODULE ~214] → [REDUNDANT INTERVAL SUPPRESSION MODULE ~910]

# FIG. 10

```
                                    ⟋ 100
┌─────────────────────────────────┐
│    VIDEO DATA ACQUISITION        │
└─────────────────────────────────┘
                 │
                 ▼                  ⟋ 212
┌─────────────────────────────────┐
│     VIDEO FEATURE AMOUNT         │
│      EXTRACTION MODULE           │
└─────────────────────────────────┘
                 │
                 ▼                  ⟋ 900
┌─────────────────────────────────┐
│  ACTION START/END LIKELIHOOD     │
│     DETERMINATION MODULE         │
└─────────────────────────────────┘
                 │
                 ▼                  ⟋ 902
┌─────────────────────────────────┐
│     CANDIDATE MOVEMENT           │
│  INTERVAL GENERATION MODULE      │
└─────────────────────────────────┘
                 │
                 ▼                  ⟋ 904
┌─────────────────────────────────┐
│          LOOP 1                  │
│  Foreach CANDIDATE INTERVAL      │
└─────────────────────────────────┘
                 │
                 ▼                  ⟋ 214
┌─────────────────────────────────┐
│    ACTION ESTIMATION MODULE      │
└─────────────────────────────────┘
                 │
                 ▼                  ⟋ 908
┌─────────────────────────────────┐
│          LOOP 1                  │
│           End                    │
└─────────────────────────────────┘
                 │
                 ▼                  ⟋ 910
┌─────────────────────────────────┐
│     REDUNDANT INTERVAL           │
│     SUPPRESSION MODULE           │
└─────────────────────────────────┘
```

FIG. 11

EP 3 920 142 A2

EP 3 920 142 A2

## FIG. 12

START LIKELIHOOD _1200_

END LIKELIHOOD _1202_

LIKELIHOOD FILTER _1300_

CANDIDATE MOVEMENT INTERVAL GENERATION MODULE _902_

# FIG. 13

FRAME 1 → FRAME T

LIKELIHOOD THRESHOLD-BASED DETERMINATION

CLUSTER 1

CLUSTER 2

CLUSTER k

START LIKELIHOOD

1200

END LIKELIHOOD

1202

CANDIDATE INTERVAL m

CANDIDATE INTERVAL 2

CANDIDATE INTERVAL 1

CANDIDATE MOVEMENT INTERVAL

LIKELIHOOD THRESHOLD-BASED DETERMINATION

CLUSTER 1

CLUSTER 2

CLUSTER k

902

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018206321 A

**Non-patent literature cited in the description**

- **KAREN SIMONYAN et al.** Two-stream convolutional networks for action recognition in videos. *Proceedings of the 27th International Conference on Neural Information Processing Systems,* 2014

- **SHUIWANG JI et al.** 3D Convolutional Neural Networks for Human Action Recognition. *IEEE Transactions on Pattern Analysis and Machine Intelligence,* 2013
- Optical Flow Estimation. **FLEET, DAVID J. ; WEISS, YAIR.** Handbook of Mathematical Models in Computer Vision. Springer, 2006, 237-257